# EUROPÄISCHE PATENTSCHRIFT

(11) **EP 1 672 042 B1**
(45) Veröffentlichungstag und Bekanntmachung des Hinweises auf die Patenterteilung: **27.01.2010**
(21) Anmeldenummer: 05027474.5
(22) Anmeldetag: 15.12.2005
(51) Int. Cl.: C09D 183/04, C08K 9/06

(54) **Antihaftschicht aus vernetzten Nanopartikeln**
Non-adhesive layer from cross-linked nano-particles
Couche anti-adhésive à base de nanoparticules réticulées

(30) Priorität: 20.12.2004 DE 102004061137
(43) Veröffentlichungstag der Anmeldung: 21.06.2006
(73) Patentinhaber: Koenig & Bauer AG, 97080 Würzburg (DE)
(72) Erfinder: Risse, Gunter, Dr., 01237 Dresden (DE); Koch, Michael, Dr.-Ing., Cossebaude 01462 (DE)

(56) Entgegenhaltungen:
- DE-A1- 19 746 885
- US-A- 6 008 285
- US-A- 6 162 498
- US-A1- 2004 247 899

## Beschreibung

Die Erfindung betrifft eine Antihaftschicht und ein Verfahren zur Herstellung einer Antihaftbeschichtung aus vernetzten anorganischen Nanopartikeln und Zusätzen von Polyorganosiloxanen.
Derartige Schichten können beispielsweise vorteilhaft für eine farbabweisende Beschichtung von Druckmaschinenteilen, die mit frisch bedruckten Oberflächen in Kontakt kommen und durch Ablagerungen von Druckfarbe in ihrer Funktion gestört werden oder die Druckqualität vermindern, wie beispielsweise bedruckstoffführende Zylinder oder Bedruckstoffleitelemente, eingesetzt werden. Ein weiteres Einsatzgebiet bildet die Trennpapierbeschichtung, für die kontinuierliche Antihaftbeschichtung von langen Stoffbahnen bzw. Polymerfolien oder als Hilfsmittel für die Enthaftung von Formteilen aus Pressformen. Die erfindungsgemäße Antihaftschicht ist ebenfalls dazu geeignet, die Entfernbarkeit von Wasser, Eis oder Verschmutzungen auf Glasscheiben, Fahrzeugoberflächen oder Sanitäreinrichtungen zu erleichtern oder Ablagerungen stark zu verringern.
Bekannt sind Antihaftschichten, bei denen die antiadhäsiven Eigenschaften durch den Einsatz von Silicon realisiert werden. Der Begriff "Silicon" kennzeichnet eine umfangreiche Gruppe von synthetischen polymeren Verbindungen, in denen Siliziumatome über Sauerstoffatome verknüpft und die restlichen Valenzen des Siliziums durch Kohlenwasserstoffreste abgesättigt sind. Eine andere Bezeichnung für Silicone ist Polyorganosiloxane.
In Antihaftschichten werden Polyorganosiloxane in verschiedenen Einsatzformen verwendet, z.B. als Teil von Polymergemischen, als Additiv in Beschichtungsmischungen, als Komponente in Copolymerisaten oder auch ohne weitere Zusätze in reiner Form.

Bekannt sind antihaftende Beschichtungen mit Lacken, denen zur Erzeugung der antiadhäsiven Eigenschaften Polyorganosiloxane zugesetzt werden (DE 35 35 283 A1).
Nachteilig daran ist, dass dabei hohe Polyorganosiloxan-Konzentrationen notwendig sind, um einen merklichen Antihafteffekt zu erreichen. Die damit verbundene Verdünnung der Binderkomponenten des Lackes führt zur Verschlechterung der Eigenschaften des Lackes und zur verringerten mechanischen Beständigkeit der damit hergestellten Schichten.

Bekannt sind auch Beschichtungen aus Blockcopolymerisaten von Polyorganosiloxanen und organischen Polymeren, wie z.B. Vinylpolymeren oder Polyacrylaten bzw. Polymethacrylaten (US 5,370,930). Der Anteil an Polysiloxan muss in diesen Materialien oberhalb von 80% liegen, damit diese ausreichende antihaftende Eigenschaften erreichen.

Bekannt sind weiterhin antihaftende Beschichtungen, denen ein Additiv zugesetzt wird, das aus einem Polymer mit Seitenketten von Polydiorganosiloxanen besitzt, die einen Gewichtsanteil von bis zu 25% des Polymergewichtes haben (DE 100 48 259 A1).
In den Beschichtungszusammensetzungen, in denen Polyorganosiloxane in hoher Konzentration neben anderen Polymeren oder neben kolloiden Partikeln vorliegen, besteht oftmals eine begrenzte Lösefähigkeit für Polyorganosiloxane. Diese Lösungen neigen deshalb zur Unbeständigkeit und es kommt zur Entmischung bzw. zum vorzeitigen Gelieren der Zusammensetzung.

In der DE 198 50 968 A1 wird eine Antihaftschicht aus Polyorganosiloxanen (insbesondere Polyhydrogenmethylsiloxan) ohne weitere polymere Zusätze vorgeschlagen, die bei Temperaturen zwischen 100 und 170 °C ausgehärtet werden.
In einem bekannten Verfahren erfolgt die Vernetzung von Polysiloxanen unter Einbeziehung von Vinylgruppen in Anwesenheit von Platin- oder Zinn-haltigen Katalysatoren (US 6,387,452). Die gebrauchsfertigen Beschichtungsmischungen haben eine begrenzte Lebensdauer im unvernetzten Zustand von etwa 10 h bis maximal 24 h. Dies hat einen negativen Einfluss auf die Wirtschaftlichkeit der Beschichtung und schränkt deren Anwendungsbereiche ein.

In der DE 689 12 024 T2 wird der Einsatz von hydridfunktionellen Polyorganosiloxanen zur Herstellung von Silicon-Trennmittelüberzügen beschrieben. Dabei werden hydridfunktionelle Polyorganosiloxane mit Verbindungen umgesetzt, die über funktionelle Gruppen mit Mehrfachbindungen verfügen. Zur Aktivierung dieser Reaktion wird ein Platin-haltiger Katalysator eingesetzt.
Ebenfalls bekannt ist die Anwendung von Peroxiden zur Vernetzung von Polysiloxanen (US 2,448,265). Bei diesem Verfahren ist die Anwesenheit von Verbindungen mit Vinylgruppen, welche die Effizienz der Vernetzung verbessern, im Reaktionsgemisch von Vorteil (US 2,445,794).
Der Nachteil der reinen Polysiloxanschichten liegt insbesondere in deren nicht ausreichenden Widerstandsfähigkeit gegenüber abrasiven Belastungen.

Aus den stark antiadhäsiven Eigenschaften der reinen Polyorganosiloxanschichten ergeben sich Haftprobleme auf den zu beschichtenden Materialien. Man versucht dieses Problem bei metallischen Substraten zu lösen, indem deren Oberfläche so gestaltet ist, dass es zu einer möglichst starken mechanischen Verankerung der Antihaftschicht kommt (DE 198 50 968 A1).

In der US 5,215,801 wird eine Antihaftschicht aus einem Siliconharz beschrieben, dem Si02-Pulver mit dem Ziel zugesetzt wird, die Haftung der Schicht auf dem jeweiligen Substrat zu erhöhen. Es sind aus der US 5,330,836 auch Polyorganosiloxan-Schichten bekannt, in die SiO2-Partikel als Füllstoff eingemischt werden, auf deren Oberfläche Verbindungen chemisch angekoppelt werden, die über reaktive funktionelle Gruppen verfügen. Diese funktionellen Gruppen sollen eine chemische Anbindung der Si02-Partikel an das Polyorganosiloxan und damit eine insgesamt bessere Vernetzung in der Schicht bewirken.

Vorgeschlagen werden auch Antihaftschichten unter Verwendung von anorganischen Nanosolen, denen hydrophobierende oder oleophobierende Additive zugesetzt werden. Bei den Additiven handelt es sich um Hydrolyseprodukte von langkettigen Trialkoxysilanen R-Si(OR)3 oder Dialkoxysilanen R-Si(OR)2, wobei R 4 bis 18 Kohlenstoffatome in Alkyl-, Aryl, Hydroxyalkyl, Epoxy- oder Polyether-Resten enthält. Darüber hinaus können als Additive auch Polysiloxane mit endständigen Alkyl-, Aryl-, Hydroxyalkyl-, Epoxy- oder Polyether-Resten verwendet werden.
Die antihaftenden Eigenschaften der damit hergestellten Schichten werden durch deren Gehalt an Verbindungen mit langen Kohlenwasserstoffketten bzw. durch Polyorganosiloxane hervorgerufen. Die Ursache für diese Wirkung der genannten Verbindungen ist deren Fähigkeit zur Absenkung des polaren Anteils der Oberflächenenergie der Schichten. Nachteilig ist, dass die mechanische Stabilität der Schichten mit zunehmendem Gehalt an Verbindungen mit langen Kohlenwasserstoffketten oder Polyorganosiloxan stark abnimmt. Deshalb kann insbesondere Schichten, die einer abrasiven Belastung ausgesetzt sind, nur eine relativ geringe Menge Additive zugesetzt werden. Damit sind auch die antiadhäsiven Eigenschaften dieser Schichten begrenzt. Bei Einsatz der mittels der genannten Additive modifizierten anorganischen Sole werden daher Schichten erhalten, die für einige Einsatzbereiche eine nicht ausreichende Verschleißfestigkeit und Antihaftung aufweisen. Neben der begrenzten Menge an organischen Komponenten wirkt sich auch der hohe Anteil an polaren anorganischen Verbindungen negativ auf die antiadhäsiven Eigenschaften aus.

Weiterhin ist aus der US 6,162,498 ist eine verschleißfeste Beschichtung bekannt geworden, die ausschließlich aus monomeren Silanen (allg. Formel SiₙH₂ₙ₊₂) gebildet ist. Auch die in der DE 197 46 885 A1 beschriebenen Verfahren zur Herstellung von nanostrukturierten Formkörpern und Schichten basieren auf rein anorganischen Schichtkomponenten, insbesondere Metalloxiden, denen Silane zugesetzt sein können. Aus der US 6,008,285 ist bekannt, die anorganische Silan-Netzwerkstruktur durch organische haftungsverbessernde Epoxid-Gruppen zu modifizieren.

Bei den oben genannten Veröffentlichungen (US 6,162,498, DE 197 46 885 A1, US 6,008,285) handelt es sich um Materialien zur Herstellung von Schichten, die auf hydrolysierbaren Silanen basieren. Diese Silane sind Monomere oder Oligomere, die bei der unmittelbaren Schichtbildung durch Kondensationsreaktionen in ein entstehendes räumliches Netzwerke eingefügt werden. Es liegen keine linearen langkettigen Moleküle, sondern weitgehend regellose Strukturen vor.

Der Erfindung liegt die Aufgabe zugrunde, eine Antihaftschicht zu entwickeln, die eine starke Antihaftung insbesondere gegenüber adhäsiven Flüssigkeiten oder Pasten, wie zum Beispiel Druckfarben, besitzt, und die bei guter Haftung auf den beschichteten Materialien eine verbesserte Verschleißfestigkeit aufweist.

Diese Aufgabe wird mit der im ersten Patentanspruch gekennzeichneten Antihaftschicht oder mit dem im dritten Patentanspruch gekennzeichneten Verfahren zur Herstellung einer Antihaftbeschichtung gelöst. Die Antihaftschicht und die Antihaftbeschichtung wird nach dem an sich bekannten Sol-Gel-Verfahren unter Verwendung von anorganischen Nanosolen mit einem Zusatz von Polyorganosiloxanen hergestellt, wobei ein anorganischorganisches Kompositmaterial entsteht, in dem erfindungsgemäß auch das Polyorganosiloxan in räumlich vernetzter Form vorliegt.
Das Kompositmaterial weist somit zwei interpenetrierende dreidimensionale Netzwerke auf, ein anorganisches Netzwerk mit -O-Si-O - Bausteinen und ein Polyorganosiloxan-Netzwerk.

In dieser Netzwerkstruktur liegt die Ursache für die verbesserten Verschleißeigenschaften gegenüber vorstehend genannten, bekannten Antihaftschichten mit eingemischten SiO2-Füller-Partikeln, da durch das Einmischen der beschriebenen Füllerpartikel in ein Siliconharz kein Kompositmaterial mit einem räumlich strukturierten anorganischen Netzwerk erhalten werden kann.

Überraschend zeigte sich, dass das beschriebene Kompositmaterial bereits bei einem relativ geringen Anteil an Polyorganosiloxanen von 20 % stark antihaftende Eigenschaften besitzt. Mit dem daraus resultierenden, vorteilhaft großen Volumenanteil des anorganischen Netzwerkes ist es möglich, eine im Vergleich zu bekannten reinen Polyorganosiloxanschichten wesentlich größere Verschleißfestigkeit und Haftfestigkeit auf metallischen und keramischen Substraten bei vergleichbaren antiadhäsiven Eigenschaften zu erreichen. Vorzugsweise liegt der Anteil an Polyorganosiloxanen in der Schicht im Bereich zwischen 20 % und 80 %. Es sind aber auch Anwendungen möglich, bei denen der Anteil an Polyorganosiloxanen in der Schicht weniger als 20 % beträgt.
Die erfindungsgemäße Antihaftschicht bzw. Antihaftbeschichtung wird mittels Sol-Gel-Verfahren aus anorganischen Nanosolen hergestellt.
Zunächst werden anorganische Partikel im Nanometerbereich (Nanopartikel) aus einem Alkoxysilan durch Hydrolyse und partielle Kondensation unter Zusatz von Additiven gewonnen, aus denen durch kolloidale Dispergierung der anorganischen Nanopartikel in einem Alkohol ein Nanosol hergestellt wird. Das Nanosol wird unter Zusatz von Polyorganosiloxanen mit Mehrfachbindungen und weiteren vernetzungsfördernden Zusätzen modifiziert. Das Nanosol kann zur Erhöhung der Verschleißfestigkeit zusätzlich mit Hartstoffpartikeln modifiziert werden und wird danach auf die Oberfläche eines Trägermaterials aufgetragen. Während einer folgenden Wärmebehandlung wird das Lösungsmittel entzogen, die Schicht geliert und schrumpft. Dabei vernetzen die anorganischen Nanopartikel und parallel dazu bilden auch die Polyorganosiloxane ein Netzwerk aus, indem sich zunächst im Gel Ketten ausbilden, die sich bei weiterem Schrumpfen des Gels zu räumlichen Netzwerken verbinden. Bevorzugte Dispergiermittel für das Nanosol sind organische Lösungsmittel, Alkanole, wie beispielsweise Butanol.
Voraussetzung für die Ausbildung des Polyorganosiloxan-Netzwerkes ist der Zusatz von einem oder mehreren Polyorganosiloxanen, welche Gruppen mit Mehrfachbindungen, insbesondere Vinylgruppen und/oder Epoxygruppen und/oder Si-H-Gruppen, besitzen.
Bei Zusatz vernetzungsfördernder Additive wird die Vernetzung der Schichtbildner bereits bei Umgebungstemperaturen eingeleitet, so dass eine separate Wärmebehandlung zur Fixierung und Aushärtung der Antihaftschicht nur dann erforderlich ist, wenn eine höhere Verschleißfestigkeit erzielt werden soll.
Für eine höhere Verschleißfestigkeit ist auch der Zusatz von Monomeren mit funktionellen Gruppen, z.B. Epoxygruppen und/oder Vinylgruppen und/oder Si-H-Gruppen, zum Nanosol vorteilhaft, die die räumliche Vernetzung der Schichtbestandteile unterstützen.
Für Anwendungen, bei denen eine besonders hohe Verschleißfestigkeit gegenüber abrasiver Beanspruchung erforderlich ist, erfolgt ein Zusatz von Hartstoffpartikeln zum Nanosol.

Es zeigte sich, dass das Nanosol zur Herstellung der erfindungsgemäßen Antihaftschicht bzw. Antihaftbeschichtung eine im Vergleich zu üblichen Silikonharzmischungen größere zeitliche Stabilität im Bereich von mehreren Wochen aufweist. Ursache für die größere Lebensdauer ist der Verdünnungseffekt durch die Dispergierung der Feststoffe im Nanosol.

Besonders ausgeprägte antiadhäsive Eigenschaften treten bei der erfindungsgemäßen Antihaftschicht genau dann auf, wenn die Gesamtoberflächenenergie einen Wert im Bereich zwischen 20 und 30 mN/m aufweist und der polare Anteil der Oberflächenenergie unterhalb von 5% der Gesamtoberflächenenergie beträgt. Die Oberflächenenergie ist auf einfache Weise mit Randwinkelmessungen ermittelbar. Da die Oberflächenenergie im Wesentlichen durch den Anteil der Polyorganosiloxane bestimmt wird, bietet die erfindungsgemäße Antihaftschicht daher den weiteren Vorteil, dass der optimale Anteil der Polyorganosiloxane einfach mit Hilfe von Randwinkelmessungen zu ermitteln ist.

Das Verfahren zur Herstellung der erfindungsgemäßen Antihaftbeschichtung soll an zwei Ausführungsbeispielen näher erläutert werden.
erstes Ausführungsbeispiel:

Die Antihaftbeschichtung wird nach dem an sich bekannten Sol-Gel-Verfahren hergestellt, wobei das Nanosol anorganische Nanopartikel mit einer Partikelgröße zwischen 0,5 nm und 20 nm, vorzugsweise zwischen 0,3 nm und 0,7 nm, und mit einem Feststoffanteil von 5 % enthält, die in Butanol kolloidal dispergiert sind. Das Nanosol wird durch Hydrolyse und partielle Kondensation von Tetraethoxysilan unter Zusatz von Additiven hergestellt.
Bei den Additiven handelt es sich um 0,4 % Dichlorbenzoylperoxid, 10 ppm Platin (als Hexachloroplatinsäure-Hydrat), 5 % Vinylmethylsiloxan-Dimethylsiloxan Copolymer (mit 1% Vinylmethylsiloxan) und 2 % Methylhydropolysiloxan. Zur Verbesserung der Verschleißfestigkeit können dem Nanosol zusätzlich einzelne oder mehrere vernetzungsfördernde Monomere zugesetzt werden. Dafür sind beispielsweise Diethylmethylsilan, Chlorodimethylsilan, Octadecylsilan, Divinylbenzol, Ethylenglykoldimethacrylat oder Glycidylmethacrylat geeignet.

Das unter Zusatz von Polyorganosiloxanen modifizierte Nanosol wird auf das zu beschichtende Trägermaterial beispielsweise mittels Tauchen und Ziehen aufgebracht und einer thermischen Behandlung unterzogen. Der Lösungsmittelentzug (Gelieren) und die dabei ablaufende räumliche Vernetzung der Schichtbildner erfolgt zwecks optimaler Stabilisierung der Antihaftbeschichtung bei einer Temperatur bis 180 °C über eine Zeitdauer von ca. 3 h.
Im Falle geringer mechanischer Beanspruchung der Antihaftbeschichtung ist es aufgrund der vernetzungsfördernden Zusätze im Nanosol und bei Einsatz leicht flüchtiger Lösungsmittel ausreichend, wenn die Vernetzung der Schichtbildner bei Umgebungstemperaturen abläuft.
Die räumliche Vernetzung der Polyorganosiloxane wird dabei mit Hilfe von Peroxiden oder anderen Radikal-Startern initiiert. Eine Netzwerkbildung der Polyorganosiloxane ist ebenso durch die Wirkung eines beispielsweise platin- oder zinnhaltigen Katalysators mit metallischen oder chemisch gebundenen Platin- oder Zinnanteilen bis zu 1000 ppm möglich.
Die Vernetzung wird ebenfalls initiiert durch Initiatoren für ionische Polymerisationsreaktionen, die Lewis-Säuren , wie beispielsweise Aluminiumtriflourid, enthalten.
Die wärmebehandelte Schicht besitzt eine stark abweisende Wirkung gegenüber adhäsiven Materialien, eine gute Kratzfestigkeit infolge des anorganischen Netzwerkes und eine gute Beständigkeit gegenüber organischen Lösungsmitteln.
zweites Ausführungsbeispiel:

In einer vorteilhaften weiteren Ausführungsform enthält die erfindungsgemäße Antihaftschicht bzw. Antihaftbeschichtung zusätzlich einen Anteil von 0,5 % Diamantpulver oder kubisches Bornitrid mit einer Partikelgröße von 0,1 µm bis 5 µm, vorzugsweise im Größenbereich von 0,7 µm, der einem Nanosol mit der im ersten Ausführungsbeispiel genannten Zusammensetzung zugesetzt wurde. Die daraus gebildete Antihaftschicht weist gleichmäßig verteilte Diamantpartikel auf, welche der Schicht zusätzlich eine erhöhte Stabilität gegenüber abrasivem Verschleiß verleihen, die beispielsweise für bedruckstoffführende Leiteinrichtungen in Druckmaschinen benötigt wird.

Mit Hilfe der messtechnisch leicht zugänglichen Oberflächenenergie kann der für eine stark antihaftende Wirkung der Schicht notwendige Anteil an Polyorganosiloxanen im Nanosol über eine einfache Versuchsreihe ermittelt werden, indem die Oberflächenenergie der damit hergestellten Antihaftschichten bzw. Antihaftbeschichtungen in Abhängigkeit vom Polyorganosiloxananteil erfasst wird. Die für eine maximale Antihaftwirkung anzustrebende Gesamtoberflächenenergie sollte zwischen 20 und 30 mN/m und die polare Oberflächenenergie sollte optimal unterhalb 2 % liegen.
Die Bestimmung der Gesamtoberflächenenergie und des polaren bzw. unpolaren Anteils der Oberflächenenergie der erfindungsgemäßen Schichten erfolgt mit Hilfe von Randwinkelmessungen mit Wasser als polare Flüssigkeit und mit Methylenjodid als unpolare Flüssigkeit.
Die gewünschte anti-adhäsive Wirkung tritt vorteilhaft bereits bei einem Polyorganosiloxananteil von 20% ein.

Die erfindungsgemäßen Antihaftschichten bzw. Antihaftbeschichtungen besitzen eine starke Antihaftwirkung gegenüber Wasser und wasserbasierten Reinigungsmitteln, hochviskosen Flüssigkeiten und Pasten, wie z.B. Druckfarben oder Lacke, aber auch gegenüber Klebebändern. Aufgrund ihrer guten Haftung und hohen Verschleißfestigkeit sind sie auch für den Einsatz unter mechanischer Beanspruchung, wie beispielsweise in Druckmaschinen zur Bedruckstoffführung, sehr gut geeignet.

Die erfindungsgemäße Antihaftschicht bzw. Antihaftbeschichtung ist auch geeignet, die Haftfestigkeit von Wasser- oder Eisschichten auf witterungsexponierten Oberflächen stark zu verringern, so dass diese Ablagerungen sehr leicht entfernt werden können. Die Antihaftbeschichtung kann zum Beispiel dazu eingesetzt werden, Glasscheiben von Kraftfahrzeugen, Flugzeugen oder Schiffen frei von Wassertropfen, Niederschlägen oder Eis zu halten bzw. den Aufwand zur Beseitigung von Eis und Verschmutzungen von Oberflächen stark zu verringern. Ebenso wird die Haftung von Wasser oder Schmutzwasser auf sanitären Einrichtungen oder Armaturen reduziert, so dass beispielsweise Kalkablagerungen zumindest vermindert werden können.
Zur Beschichtung der zu schützenden Oberflächen wird das Nanosol auf die zu schützende Oberfläche durch Aufstreichen oder Aufspritzen aufgetragen und kann abhängig von der zu erzielenden Schichtdicke einer Zwischentrocknung unterzogen werden. Zur
Herstellung der Transparenz der Antihaftbeschichtung wird die Schicht poliert. Infolge der mit Verdunstung des Lösungsmittels anlaufenden Vernetzungsreaktionen entwickelt die Beschichtung bereits ohne zusätzliche Wärmebehandlung ausgeprägte antiadhäsive Eigenschaften.

## Patentansprüche

1. Antihaftschicht aus vernetzten anorganischen Nanopartikeln und Zusätzen von Polyorganosiloxanen, **gekennzeichnet durch** in einem Sol- Gel- Verfahren gebildete interpenetrierende dreidimensionale Netzwerke
- aus anorganischen -O-Si-O- Bausteinen und
- dem Sol- Gel- Verfahren zugesetzten Polyorganosiloxanen,
wobei
- die Polyorganosiloxane Gruppen mit Mehrfachbindungen, insbesondere Vinylgruppen und/oder Epoxygruppen und/oder Si-H-Gruppen enthalten,
- der zugesetzte Polyorganosiloxananteil in der Antihaftschicht vorzugsweise mindestens 20 % und höchstens 80 % beträgt,
- die Gesamtoberflächenenergie der Antihaftschicht 20 mN/m bis 30 mN/m beträgt und der polare Anteil der Oberflächenenergie kleiner als 5 % der Gesamtoberflächenenergie ist.

2. Antihaftschicht nach Anspruch 1, **dadurch gekennzeichnet, dass** die Antihaftschicht zusätzlich Hartstoffpartikel mit einer Partikelgröße im Bereich von 0,1 µm bis 5 µm enthält.

3. Verfahren zur Herstellung einer Antihaftbeschichtung nach Anspruch 1, **gekennzeichnet durch** folgende Schritte:
- Herstellung eines anorganischen Nanosols **durch** Hydrolyse eines Alkoxysilans und partielle Kondensation,
- Modifizierung des Nanosols **durch** Zusatz von Polyorganosiloxanen, welche Vernetzungsreaktionen ermöglichende funktionelle Gruppen aufweisen, und vernetzungsfördernden Additiven,
- Auftragen des modifizierten Nanosols auf eine Oberfläche,
- Ausbildung dreidimensionaler Netzwerke der anorganischen Nanopartikel und der zugesetzten Polyorganosiloxane **durch** Wärmebehandlung.

4. Antihaftschicht nach Anspruch 1 oder Verfahren nach Anspruch 3, **dadurch gekennzeichnet, dass** das die anorganischen Nanopartikel eine Größe zwischen 0,5 nm und 20 nm aufweisen.

5. Verfahren nach Anspruch 3, **dadurch gekennzeichnet, dass** dem Nanosol Anteile von einem oder mehreren Polyorganosiloxanen zugesetzt werden, die Vinylgruppen und/oder Epoxygruppen und/oder Si-H-Gruppen aufweisen.

6. Verfahren nach Anspruch 3, **dadurch gekennzeichnet, dass** das Nanosol Anteile von einem oder mehreren Monomeren enthält.

7. Verfahren nach Anspruch 3, **dadurch gekennzeichnet, dass** die Monomere Epoxygruppen und/oder Vinylgruppen und/oder Si-H-Gruppen aufweisen.

8. Verfahren nach Anspruch 3, **dadurch gekennzeichnet, dass** das Nanosol Zusätze von Radikal-Startern, die Peroxide enthalten, und/oder Katalysatoren, die Platinmetalle oder Zinn enthalten, und /oder Initiatoren, die Lewis-Säuren enthalten, aufweist.

9. Verfahren nach Anspruch 8, **dadurch gekennzeichnet, dass** das Nanosol einen Anteil bis zu 1000 ppm an Platin in Form von metallischem oder chemisch gebundenem Platin enthält.

10. Verfahren nach Anspruch 8, **dadurch gekennzeichnet, dass** das Nanosol einen Anteil bis zu 1000 ppm an chemisch gebundenem Zinn enthält.

11. Verfahren nach Anspruch 3, **dadurch gekennzeichnet, dass** dem modifizierten Nanosol Hartstoffpartikel mit einer Partikelgröße im Bereich von 0,1 µm bis 5 µm zugesetzt werden.

12. Verfahren nach Anspruch 3, **gekennzeichnet durch**
- Auftragen des modifizierten Nanosols auf eine Oberfläche mittels Streichen oder Spritzen,
- Trocknen und/oder Polieren,
- Ausbildung der dreidimensionalen Netzwerke unter Umgebungstemperatur.

13. Druckmaschine mit einer partiellen Antihaftbeschichtung, die mit einem Verfahren nach Anspruch 3 hergestellt wird.

14. Gegenüber Wasser oder Eis exponierte Oberflächen mit einer Antihaftbeschichtung, die mit einem Verfahren nach Anspruch 12 hergestellt wird.

## Claims

1. Anti-adhesion layer of cross-linked inorganic nanoparticles and additives of polyorganosiloxanes, **characterised by** inter-penetrating three-dimensional networks, which are formed in a sol-gel method, of
- inorganic O-Si-O units and
- polyorganosiloxanes added to the sol-gel method,
wherein
- the polyorganosiloxanes contain groups with multiple bonds, particularly vinyl groups and/or epoxy groups and/or Si-H groups,
- the added polyorganosiloxane component in the anti-adhesion layer is preferably at least 20% and at most 80% and
- the total surface energy of the anti-adhesion layer is 20 mN/m to 30 mN/m and the polar component of the surface energy is less than 5% of the total surface energy.

2. Anti-adhesion layer according to claim 1, **characterised in that** the anti-adhesion layer additionally contains hard-material particles with a particle size in the range of 0.1 microns to 5 microns.

3. Method of producing an anti-adhesion coating according to claim 1, **characterised by** the following steps:
- producing an inorganic nanosol by hydrolysis of an alkoxysilane and partial condensation,
- modification of the nanosol by addition of polyorganosiloxanes, which have functional groups enabling cross-linking reactions, and additives promoting cross-linking,
- coating the modified nanosol on a surface and
- forming three-dimensional networks of the inorganic nanoparticles and the added poloyorganosiloxanes by heat treatment.

4. Anti-adhesion layer according to claim 1 or method according to claim 3, **characterised in that** the inorganic nanoparticles have a size between 0.5 nm and 20 nm.

5. Method according to claim 3, **characterised in that** parts of one or more polyorganosiloxanes having vinyl groups and/or epoxy groups and/or Si-H groups are added to the nanosol.

6. Method according to claim 3, **characterised in that** the nanosol contains parts of one or more monomers.

7. Method according to claim 3, **characterised in that** the monomers have epoxy groups and/or vinyl groups and/or Si-H groups.

8. Method according to claim 3, **characterised in that** the nanosol has additives of radical starters, which container peroxides, and/or catalysers, which contain platinum metals or tin, and/or initiators, which contain lewis acids.

9. Method according to claim 8, **characterised in that** the nanosol contains a part up to 1000 ppm of platinum in the form of metallically or chemically bound platinum.

10. Method according to claim 8, **characterised in that** the nanosol contains a part up to 1000 ppm of chemically bound tin.

11. Method according to claim 3, **characterised in that** hard-material particles with a particle size in the range of 0.1 microns to 5 microns are added to the modified nanosol.

12. Method according to claim 3, **characterised by**
- coating the modified nanosol on a surface by means of wiping or spraying,
- drying and/or polishing and
- forming the three-dimensional networks under ambient temperature.

13. Printing machine with a partial anti-adhesion coating which is produced by a method according to claim 3.

14. Surfaces, which are exposed to water or ice, with an anti-adhesion coating produced by a method according to claim 12.

## Revendications

1. Couche antiadhésive à base de nanoparticules inorganiques réticulées et d'additifs de polyorganosiloxanes,
**caractérisée par**
un réseau tridimensionnel à interpénétration obtenu par un procédé Sol-Gel comprenant :
- des composants inorganiques -O-Si-O-, et
- des polyorganosiloxanes ajoutés au procédé Sol-Gel,
dans lequel
- les polyorganosiloxanes contiennent des groupes à liaisons multiples, notamment des groupes vinyle et/ou des groupes époxy et/ou des groupes Si-H,
- la fraction de polyorganosiloxanes, ajoutée dans la couche antiadhésive représente de préférence au moins 20 % et au plus 80 %,
- l'énergie superficielle globale de la couche antiadhésive est de 20 mN/m à 30 mN/m et la partie polaire de l'énergie superficielle est inférieure à 5 % de l'énergie superficielle totale.

2. Couche antiadhésive selon la revendication1,
**caractérisée en ce qu'**
elle contient en outre de particules de matière dure avec une granulométrie de l'ordre de 0,1 µm à 5 µm.

3. Procédé de fabrication d'une couche antiadhésive selon la revendication 1,
**caractérisé par** les étapes suivantes :
- fabrication d'un nanosol inorganique par hydrolyse d'un alkoxysilane et condensation partielle,
- modification du nanosol par addition de polyorganosiloxanes, comportant des groupes fonctionnels permettant les réactions de réticulation et d'additifs favorisant la réticulation,
- application du nanosol modifié sur une surface,
- développement de réseaux tridimensionnels de nanoparticules anorganiques et de polyorganosiloxanes ajoutés, par traitement thermique.

4. Couche antiadhésive selon la revendication 1 ou procédé selon la revendication 3,
**caractérisé en ce que**
les nanoparticules inorganiques ont une granulométrie comprise entre 0,5 nm et 20 nm.

5. Procédé selon la revendication 3,
**caractérisé en ce qu'**
on ajoute au nanosol, des fractions d'un ou plusieurs polyorganosiloxanes comportant des groupes vinyle et/ou des groupes époxy et/ou des groupes Si-H.

6. Procédé selon la revendication 3,
**caractérisé en ce que**
le nanosol contient des fractions d'un ou de plusieurs monomères.

7. Procédé selon la revendication 3,
**caractérisé en ce que**
les monomères comportent des groupes époxy et/ou des groupes vinyle et/ou des groupes Si-H.

8. Procédé selon la revendication 3,
**caractérisé en ce que**
le nanosol comporte des additifs d'initiateur radicalaires renfermant des peroxydes et/ou de catalyseurs contenant du platine métallique ou du zinc et/ou des initiateurs contenant des acides de Lewis.

9. Procédé selon la revendication 8,
**caractérisé en ce que**
le nanosol contient une fraction allant jusqu'à 1000 ppm de platine sous la forme de platine métallique ou de platine lié chimiquement.

10. Procédé selon la revendication 8,
**caractérisé en ce que**
le nanosol contient une fraction allant jusqu'à 1000 ppm de zinc lié chimiquement.

11. Procédé selon la revendication 3,
**caractérisé en ce que**
le nanosol modifié contient des particules dures ayant une granulométrie de l'ordre de 0,1 µm à 5 µm.

12. Procédé selon la revendication 3
**caractérisé en ce qu'**
- on applique le nanosol modifié sur une surface par enduction ou pulvérisation,
- on sèche et/ou on polit,
- on fait se développer les réseaux tridimensionnels à température ambiante.

13. Machine d'impression ayant un revêtement antiadhésif, partiel, obtenu par la mise en oeuvre d'un procédé selon la revendication 3.

14. Surface exposée à l'eau ou à la glace ayant un revêtement antiadhésif obtenu par la mise en oeuvre d'un procédé selon la revendication 12.
